# EUROPEAN PATENT SPECIFICATION

(11) **EP 2 362 511 B1**
(45) Date of publication and mention of the grant of the patent: **07.10.2020**
(21) Application number: 10290097.4
(22) Date of filing: 26.02.2010
(51) Int. Cl.: H02G 7/12

(54) **Spacer for medium or high voltage lines**
Abstandshalter für Mittel- bis Hochspannungsleitungen
Espaceur pour lignes à moyenne ou haute tension

(43) Date of publication of application: 31.08.2011
(73) Proprietor: Tyco Electronics SIMEL, 21220 Gevrey-Chambertin (FR)
(72) Inventor: Royer, Laurent, 21580 Coulon (FR); Godard, Jérôme, 21910 Savouges (FR); Charton, Thomas, 71270 Charette Varennes (FR)
(74) Representative: Grünecker Patent- und Rechtsanwälte PartG mbB

(56) References cited:
- EP-A1- 0 379 446
- EP-A1- 0 384 807
- WO-A1-00/27009
- FR-A1- 2 169 007
- FR-A1- 2 546 343
- JP-A- H1 023 644

## Description

The invention relates to a spacer for at least two overhead medium or high voltage lines, comprising a central section, at least two line receptacles which are arranged on opposite sides of the central section and comprise each at least a first receiving section and a second receiving section, the receiving sections being adapted to be moved relative to each other from an installation position, in which the receptacle provides an insertion opening for inserting at least one line into the receptacle, into an operation position, in which the receiving sections are locked and the insertion opening is closed, wherein the second receiving section is articulated by a pivot, the pivot allowing for moving the receiving sections relative to each other from an installation position into an operating position, wherein, wherein the receptacle is provided with a spring lock, which in the operation position self-actingly locks the receiving sections and wherein the spring-lock comprises a spring-biased latch member on one of the receiving sections, the latch member in the operation position being engaged behind a locking section of the other receiving section under effect of spring action.

Further, the invention relates to a spacer mounting tool for mounting a spacer for at least two overhead medium or high voltage lines, the spacer comprising at least two receptacles, the receptacles each having at least two receiving sections which can be opened for insertion of at least one line and locked in a closed state, the spacer mounting tool being provided with a coupling section which is adapted to be engaged to one of the receiving sections.

Furthermore, the invention relates to a method for installing a spacer on at least two overhead high or medium voltage lines, the method including the steps of inserting each of the lines into an insertion opening of a line receptacle of the spacer, closing each insertion opening by moving a first receiving section relative to a second receiving section, wherein the second receiving section is pivoted in a closing direction to close the receptacle.

Medium or high voltage transmission lines are used to transmit energy over short or long distances as necessary or desired. To design transmission line systems economically, the lines are often bundled. Spacers and/or spacer-dampers are most often used to ensure sufficient separation of the lines. While spacers are used to ensure sufficient distance between conductors, spacer dampers additionally damp vibrations in the lines while maintaining a suitable distance between the conductors or lines.

Spacers and/or spacer dampers may be employed at specific intervals along the span of a transmission line. Dependent on the length of the transmission line, plurality of spacers can be distributed along the span of the line. As transmission lines are often employed in three phase configurations, spacers or spacer dampers may assist in maintaining spacing arrangements in rectangular or triangular configurations. Thus, often a high number of spacers or spacer dampers have to be installed when a transmission line system is built up.

Document WO 00/27009 A1 describes a line spacer for power transmission lines which is provided with two receiving sections each having a fixed jaw part and a movable jaw part which is movable by a closure lever.

Document FR 2 169 007 A1 describes four different types of receptacles for line spacers. Each of the receptacles has a body which is provided with a groove and a clamping organ for retaining the line within the groove.

Document FR 2 546 343 A1 shows a line spacer having a U-shaped middle part with notches for receiving the lines, and fastening elements for retaining the lines within the notches. Document JP H10 23644 A discloses a spacer for overhead power transmission lines with a clamp holder coupled via a hinge with a clamp main body for retaining the transmission lines. Spacers or spacer dampers known from the prior art are typically mounted by bolted connections. Receptacles of known spacers may consist of two receiving sections which are connected to each other by at least two bolts. Alternatively, the receiving sections can be connected to each other rotatable and locked in the operation position by at least one bolt. The installation of known spacers or spacer dampers, which is often conducted in high altitude, is complicated and cumbersome. Thus, a problem to be solved is how to facilitate the installation of spacers and/or spacer dampers.

This problem is solved according to the invention with a spacer and a method according to claims 1 and 13, respectively, and with a mounting tool according to claim 11.

The solution according to the present invention effects that the receiving sections are locked with each other automatically while the receptacle is moved from the installation position to the operation position. Due to the spring lock, after the insertion opening has been closed, no further mounting operations are necessary.

The spacer mounting tool facilitates the movement of the receiving sections by providing a leverage which effects the movement of the receiving sections and reduces the forces which have to be applied by the operator, in particular when the lines are to be clamped in the receptacles.

The solution according to the invention may be combined in any way with one or several of the following further advantageous embodiments respectively and further improved.

The spring lock locks automatically when the receptacle is transferred to the operation position. Preferably, the receptacle is closed by one single movement applied by the operator. This movement can be the closure of one receiving section, up to a position at which the spring lock snaps into or engages with the second receiving section.

In a further advantageous embodiment of the spacer, the latch member, in the unlocked state, can be positioned in the line described by motion of the locking section upon transferal from the installation into the operation position. Thus, the latch member at one of the receiving sections interferes with the other receiving sections when the receptacle is closed. Hence, the spring biased latch member at one of the receiving sections can be deflected by the other receiving section to overcome the locking section. Preferably, the spring biased latch member is adapted to slide on a back portion of the locking section wherein the back portion of the locking section is inclined to move the spring biased latch member from a locked position to an unlocked position, the latch member in the unlocked position moved out of the line of motion of the locking section.

To increase the resistance of the receptacle in the operation position, the spring lock may comprise a slidable locking bolt. Preferably, the latch member is formed by a slidable locking bolt. The locking bolt may extend transversally to a sliding direction. To receive the locking bolt in the locked position, the locking section may have a hook-like shape wherein the locking bolt is configured to be inserted into the hook aperture.

In a further advantageous embodiment of the invention, the spring lock may comprise a leg spring, the leg spring arranged between the locking bolt and a receiving section and encompassing each, the locking bolt and the receiving section, form fittingly. By this solution, the spring lock at the same time forms a retention system for the leg spring itself and the locking bolt. The leg spring may have a first leg and a second leg, the first leg and the second leg connected to each other by a crossbar. Preferably, the legs abut on opposing faces of the receiving sections wherein the crossbar presses the legs against the faces.

To mount the leg spring on the locking bolt, the locking bolt may be provided with circumferential notches for receiving at least a portion of a leg of the leg spring. The leg may be inserted into the circumferential notch, encompassing the bolt and thus connected to the bolt by a positive lock.

According to the invention, one receiving section is articulated by a pivot. In another advantageous embodiment of the invention, one receiving section can be supported pivotably on another receiving section and adapted to wedge on the other receiving section at the installation position. Thus, the receiving sections are maintained in the installation position, in which the receptacle provides an insertion opening for inserting a conductor into the receptacle. The receiving sections may comprise friction faces which roll off on each other and move to each other when the receptacle is opened. Thus, normal forces are generated which act from one friction face to the other friction face and result in a friction lock which retains the receiving section in the installation position. The friction faces are rounded convexly wherein the distance between a rotation axis of the moveable receiving section and the friction face of the moveable receiving section increases in an opening direction and/or the distance between the other friction face and the rotation axis decreases in rotation direction.

To further facilitate the installation process, the spacer can have a pre-locked position which is located between the installation position and the operation position, the receiving sections being locked in the pre-locked position. Therefore, one of the receiving sections may comprise a second locking section, wherein the latch member in the pre-locked position engages behind the second locking section. As well as the first locking section, the second locking section can be formed hook-like to encompass the latch member in the pre-locked position. The pre-locked position may serve to apply the receptacle undetatchably to the line for an adjustment of the spacer in relation to the received lines. To facilitate mounting the spacer in the pre-locked position on the lines, the receptacle can be automatically positioned in the pre-locked position upon transferal or movement from the installation position in the direction of the operation position.

For a flexible link between the lines and the receptacles, the receptacles each may comprise a line encasement cladding the receiving sections at the surfaces facing the line in the operation position and being configured to be deformed elastically in the installation position. The line encasement can be made of rubber or silicon. The line encasement provides a flexible link between the lines and the receptacles of the spacer and thus decreases micro-constraints within the lines which can arise when external forces, for example, affected by wind, act on the lines. By reusing strains within the lines, the lifespan of the grit installation is increased.

To facilitate mounting of the spacer, in particular to facilitate transferring of the receptacle from the installation position to the operation position or from the pre-locked position to the operation position, the above mentioned spacer mounting tool may be provided. Preferably, the spacer and the spacer mounting tool can be provided in a spacer set.

The spacer mounting tool has, according to the claimed invention, a coupling section, which is adapted to be engaged to one of the receiving sections, and an abutment surface adapted to abut on the other of the receiving sections and supporting the coupling section rotatably relative to the abutment surface. To form a passage for the coupling section from the face of the other receiving section abutting the spacer mounting tool to a coupling organ of the one receiving section, the other of the receiving sections can have a through hole for receiving the coupling portion. The coupling portion can be inserted into the through hole to be coupled with the one receiving section.

To support the abutment surface of the mounting tool rotatably, at least one receiving section may be provided with a bearing face. The bearing face can be formed from the edge or border surrounding the through hole. The bearing face can be funnel shaped or be provided with a concave inner surface, the edge serving to receive the abutment surface of the spacer mounting tool. Thus, by disposing the abutment surface on the edge of the through hole of the first receiving section and coupling the coupling section, the abutment surface can be rotated within the funnel shaped and/or concavely shaped edge.

By rotating the abutment surface, the coupling section is moved towards the abutment surface of the spacer mounting tool. As the abutment surface abuts the first receiving section and the coupling section is coupled to the second receiving section, rotating the abutment surface results in a movement of the second receiving section in a closure direction. The lever, which is preferably connected non-rotatably to the abutment surface, may be operated manually by the operator. To improve the operator convenience, the lever can be provided with a handle. The handle may have a cladding, preferably made of plastics or rubber.

To generate a friction lock between the receptacles and received lines, the lines may be clamped by the receptacles. Preferably, the lines are clamped elastically by elastically deformable line encasements.

One of the receiving sections may have a guiding organ, the guiding organ being adapted to guide the latch member from an unlocked position to a locked position. The guiding organ may comprise at least one guide groove, the latch member fitted into the guide groove to slide freely. Preferably, the guide groove is formed as an elongated through hole.

The spring of the spring lock, which may be a leg spring, can be adapted to be insertable into the guide groove in a compressed state. Preferably, the linear dimensions of the spring in the compressed state are smaller than the linear dimensions of the guide groove.

The spacer may serve as spacer damper, the receptacles being resiliently mounted on the central section. Thus, oscillation of the individual lines causes the receptacles to move relative to the central section against a resilient restraint of the respective joints, thereby damping the oscillations. The central section may have an elongated shape or may be formed ring-like or rectangularly.
The invention will be described hereinafter in greater detail and in an exemplary manner using advantageous embodiments and with reference to the drawings. The described embodiments are only possible configurations in which, however, the individual features as described above, can be provided independently of one another or can be omitted. In the drawings:
Fig. 1 is a schematic perspective view of a spacer configured according to the invention in a pre-mounted position;
Fig. 2 is a schematic perspective view of a spacer configured according to the invention in a pre-locked position;
Fig. 3 is a spacer according to the invention in an installation position;
Fig. 4 is a schematic side view of a receptacle of a spacer according to the invention;
Fig. 5 shows in greater detail the connection between the first and the second receiving section;
Fig. 6 shows in greater detail the spring lock in a pre-mounted position;
Fig. 7 shows in greater detail a receptacle in a pre-locked position;
Fig. 8 shows in greater detail a spring lock according to the invention in a position between the pre-locked position and the locked position;
Fig. 9 shows in greater detail the spring lock of Figs. 6-8 in a locked position;
Fig. 10 is a perspective view of a spacer mounting tool;
Fig. 11 is a perspective view of a receptacle according to the invention with a mounting tool coupled to the receptacle;
Fig. 12 is a schematic cross-sectional view of a receptacle with inserted mounting tool;
Fig. 13 is a schematic perspective view of a receptacle in a locked position with inserted mounting tool;
Fig. 14 is a schematic perspective view of a latch member and a leg spring.

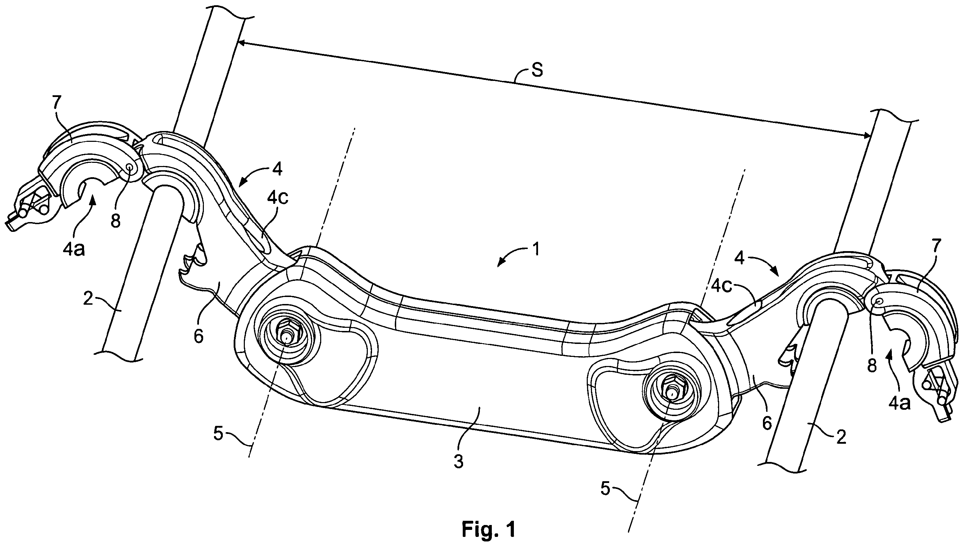

First of all, the construction of a spacer configured according to the invention will be described with reference to Fig. 1, which shows a schematic perspective view of a spacer 1 which is configured according to the invention.

The spacer 1 serves to maintain a distance S between two medium or high-voltage lines 2. The spacer 1 comprises a central section 3, at least two line receptacles 4 which are arranged on opposite sides of the central section. The line receptacles 4 are supported rotatably around a rotation axis 5 on the central section 3.

The receptacles 4 each have a first receiving section 6 and a second receiving section 7. The second receiving section 7 are articulated by a pivot 8. The pivot 8 allows for moving the receiving sections 6 and 7 relative to each other from an installation position into an operation position. Fig. 1 shows the installation position in which the receptacles 4 provide insertion openings 4a for inserting at least one line 2 into the receptacle 4. At the operation position the insertion openings 4a are closed and the receiving sections 6 and 7 are locked.

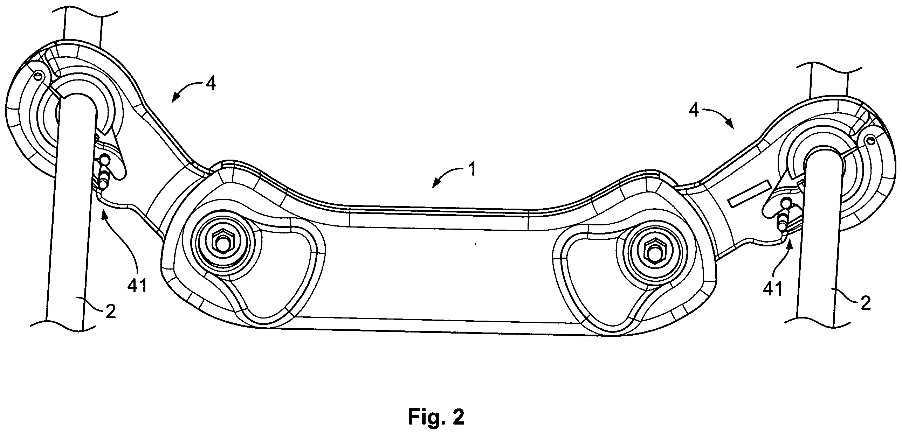

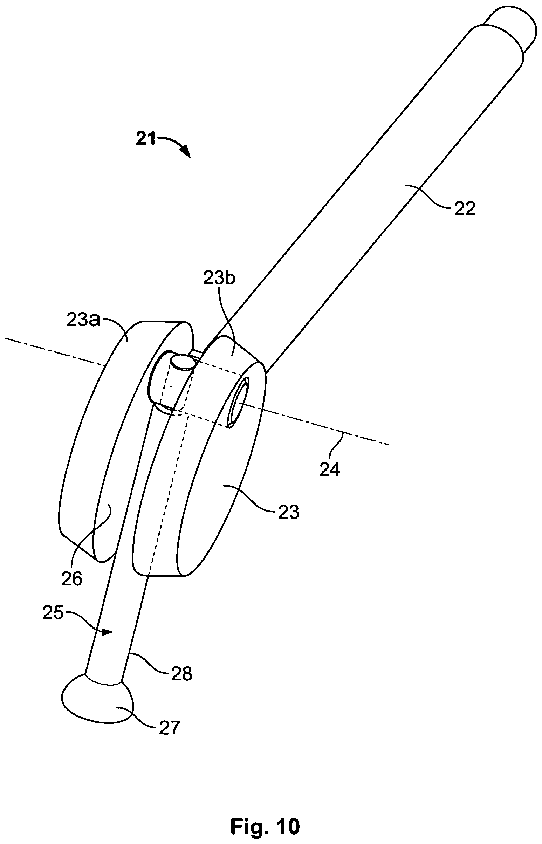

In Fig. 2 the spacer 1 is arranged in a pre-locked position. The pre-locked position allows for locking the receiving sections 6, 7 without exerting forces on the lines 2. Thus, for closing the receptacles 4 up to the pre-locked position, only small closing forces are necessary. The operator may close the receptacles 4 up to the pre-locked position by hand. Thereafter the operator can adjust the position of the spacer 1 and apply a spacer mounting tool such as shown in Fig. 10.

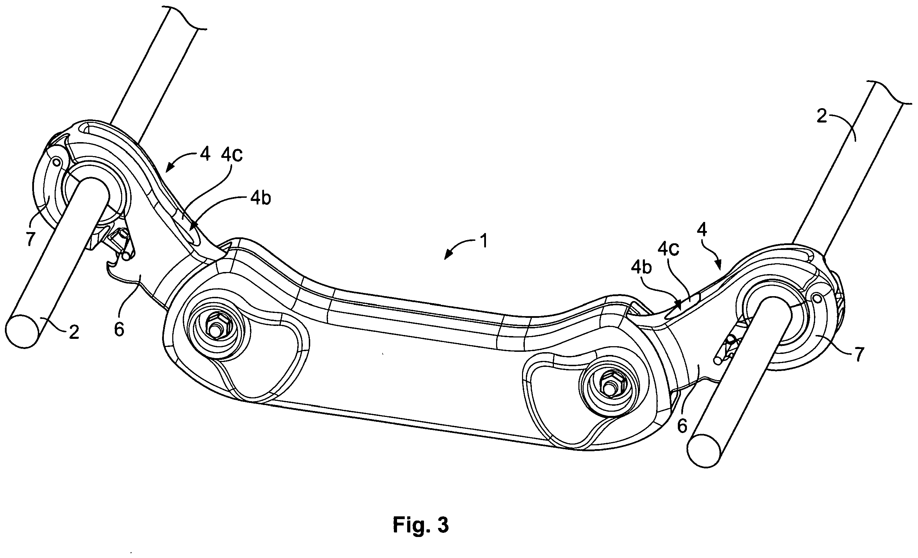

In Fig. 3 the spacer 1 is arranged in a locked position. In the locked position the lines 2 are clamped and thus connected to the receptacles 4 by a positive lock as well as by a friction lock.

To facilitate the transferral of the receptacles 4 to the operation position shown in Fig. 3, a spacer mounting tool may be provided, which is described in detail with regard to Fig. 10. An elongated coupling section of the spacer mounting tool is inserted in a through hole 4b of the first receiving section 6 and coupled with the second receiving section 7. The coupling section is rotatably supported by a main body of the mounting tool which rests on a substantially funnel-shaped bearing face 4c surrounding the insertion opening 4b.

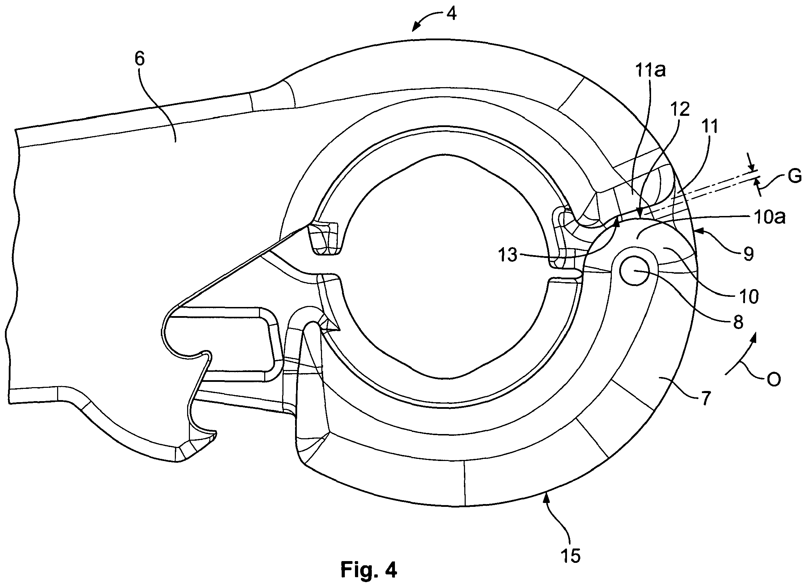

Fig. 4 is an enlarged view of a receptacle according to the invention. The receptacle is shown without the locking mechanism and without line encasements of the receiving sections at the surfaces facing the line in the operating position. The first receiving section 6 and the second receiving section 7 are preferably made of cast aluminium. To transfer the receptacle 4 from the shown operation position to the installation position, the second receiving section is rotated around the pivot 8 in an opening direction O. To maintain the installation position of the receptacle and the opened position of the second receiving section 7, respectively, the first receiving section 6 and the second receiving section 7 are adapted to be connected to each other by a friction lock at the installation position.

The receptacle 4 is provided with an articulation 9, the articulation 9 comprising the pivot 8, a clevis 10 and a tongue 11, the tongue 11 arranged within the clevis 10 to rotate freely. In the operation position of the receptacle and the closed position of the second receiving section 7, a clearance G between the clevis 10 and the base of the tongue 11 is provided which allows for a contactless rotation of the second receiving section 7 in opening direction O. While the second receiving section 7 is moved in opening direction O the clearance G decreases, up to a position at which a head portion 10a of the clevis abuts a base portion 11a of the first receiving section 6.

The second receiving section 7 may be rotated in opening direction O up to the installation position, in which a friction face 12 at the clevis 10 mates frictionally with a friction face 11a at the first receiving section 6. Thus, guided by the pivot 8, the head portion 10a of the clevis 10 acts as wedge, securing the second receiving section 7 at the installing position. To provide the rotatably connected second receiving section 7 with the wedge function, the friction face 12, which substantially faces the friction face 13 at the base portion 11a, extends eccentrically to the pivot 8. The distance between the fiction face 12 and the pivot 8 increases against the rotation direction of the second receiving section 7 and substantially against the opening direction O.

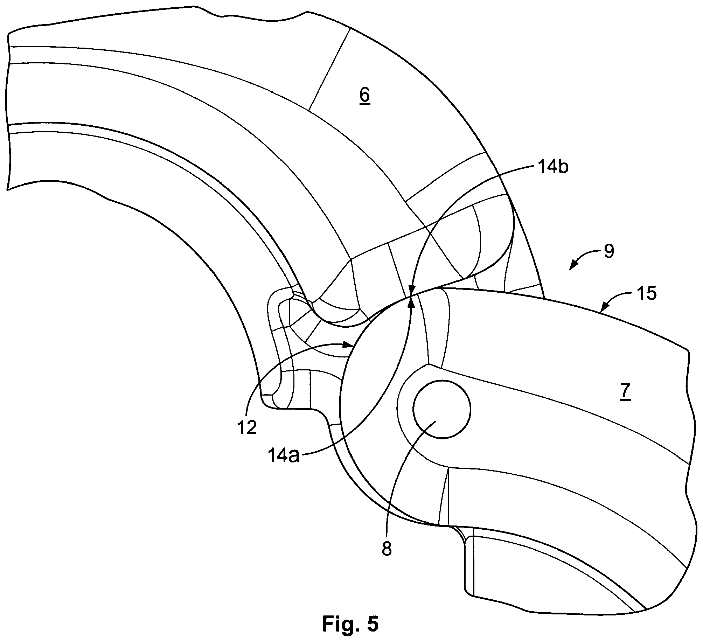

Fig. 5 shows in more detail the articulation 9 at the installation position. At the installation position a contact area 14a of the first receiving section 6 is pressed against a contact area 14b of the second receiving section. Thus, normal forces at the contact areas 14a, 14b arise which generate a friction lock between the first receiving section 6 and the second receiving section 7. The friction lock is adapted to be released manually by the operator to transfer the receptacle 4 from the installation position to the operation position. The friction lock may be released by pressing on a back 15 of the second receiving section 7.

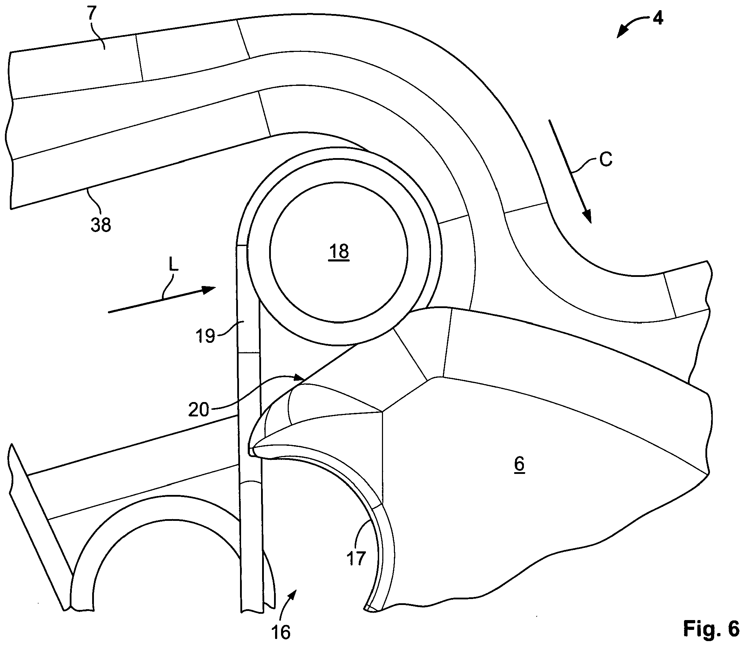

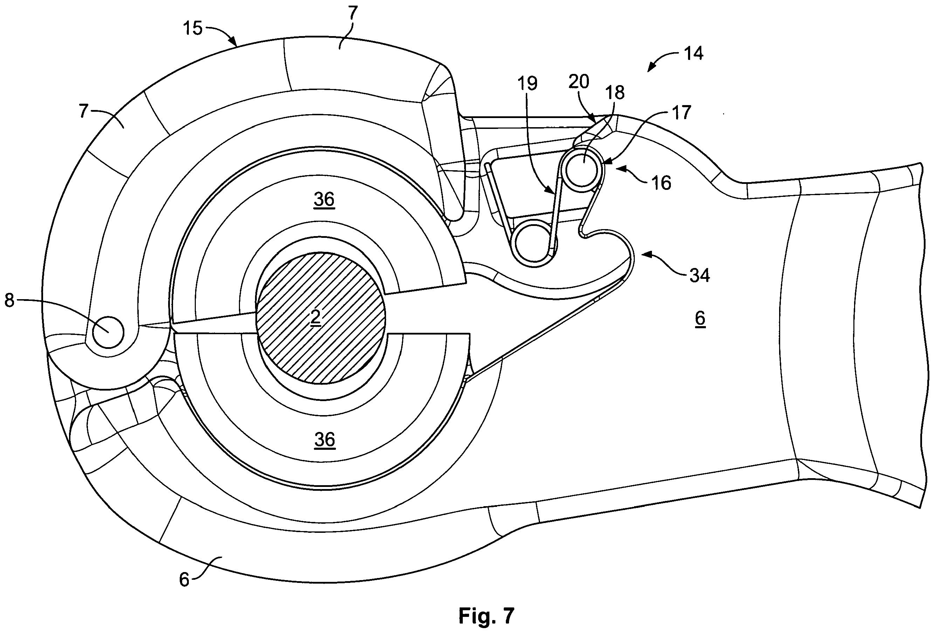

Fig. 6 shows the function of the spring lock while the receptacle is closed. The spring lock 41 comprises a latch member 18 which has a substantial shape, a spring 19 urging the latch member 18, a pre-locking section 16 and a locking section 34 (shown in Fig. 7) . The latch member 18 is formed as locking bolt, the spring 19 is formed as leg spring. Legs of the spring 19 encompass the latch member 18 and serve as retaining device for the latch member 18.

The latch member 18 is arranged slidable within an opening or groove 38 of the second receiving section 7. The spring 19 urges the latch member 18 within the groove 38 in locking direction L. When the second receiving section 7 is pivoted in a closing direction C to close the receptacle 4, the latch member 18 interferes with a deflection face 20 of the first receiving section 6. The deflection face 20 is inclined with respect to the closing direction C in such a manner that the latch member 18 when abutting the first receiving section 6 is moved against the locking direction L. The deflection face 20 passes into a hook aperture 17. The hook aperture 17 is adapted to receive the latch member 18 at a pre-locked position of the receptacle.

The first receiving section comprises a pre-locking section 16, the pre-locking section 16 having an aperture 17 for receiving a latch member 18 at a pre-locked position of the receptacle.

Fig. 7 shows in greater detail a receptacle according to the invention in a pre-locked position, in which the receiving sections 6, 7, as well as in the locked position, are locked by the spring lock 41. The latch member 18 is engaged with the pre-locking section 16 of the first receiving section 6. The pre-locking section 16 and the locking section 34 are each provided with hook-like apertures, wherein two hook-like apertures are arranged in parallel. The spring 19 presses the latch member 18 into the hook-like aperture 17 and thereby keeps the latch member 18 from overcoming the pre-locking section 16. At the pre-locked state shown in Fig. 7, the volume enclosed by the receptacle 4 for receiving the line 2 is increased. Thus, after transferral of the receptacles 4 into the pre-locked position, the spacer 1 is locked on the lines 2 and prepared for an adjustment of the spacer on the lines 2 and/or for the application of a spacer mounting tool.

The first receiving section 6 and the second receiving section 7 are provided with line encasement 36 cladding the receiving sections 6, 7 at the surfaces facing the line 2 in the operation position and being configured to be deformed elastically in the installation position. The line encasements 36 are made of elastic material, preferably silicon or rubber. When the receptacle 4 is closed, the line encasements 36 are clamping elastically the enclosed line 2.

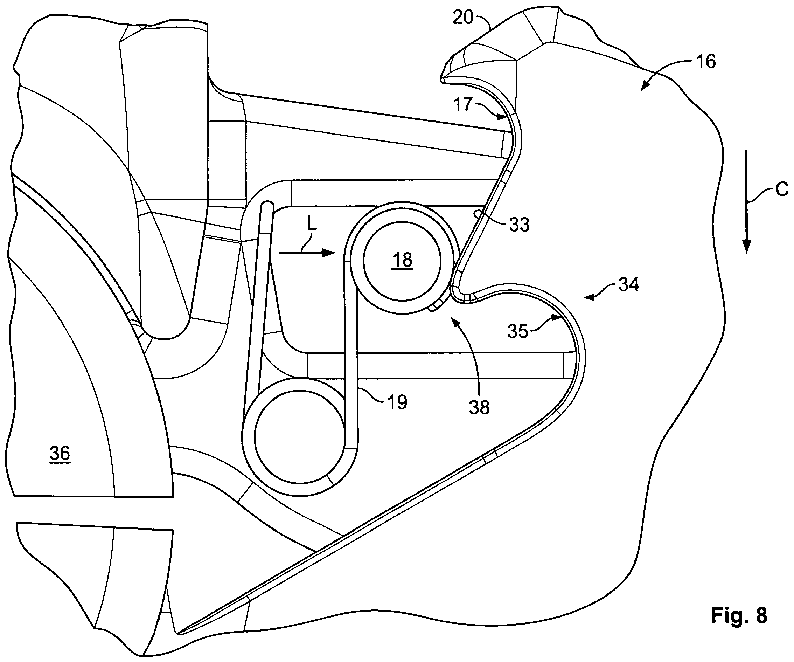

Fig. 8 is a detailed view of the locking mechanism in a position between the pre-locked position and the locked position.

When the second receiving section 7 is rotated in closing direction C to transfer the receptacle 4 from the pre-locked position to the operation position, the latch member 18 slides on the deflection face 33 of a locking section 34 against the locking direction L. As well as the deflection 20, the deflection face 33 is inclined with respect to the closing direction C, guiding the latch member 18 against the locking direction L when the second receiving section 7 is moved in closing direction C. Thus, the latch member 18 passes the deflection face 33 and snaps into an aperture 35 of the locking section 34.

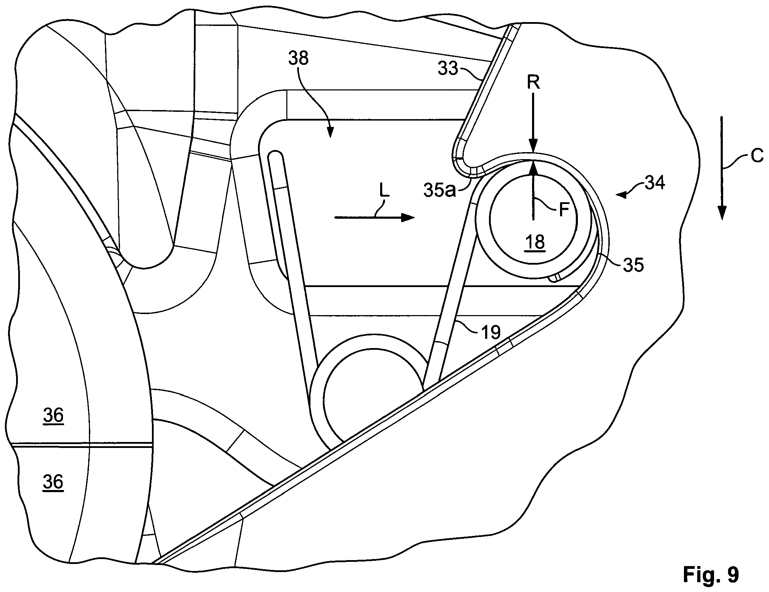

Fig. 9 is a detailed view of the locking mechanism in the pre-locked position of the spacer according to the present invention. In the locked position, the latch member 18 is located in the aperture 35 of the locking section 34. The aperture 35 is formed concavely and abuts the latch member 18 in closing direction C. External forces induced by the line 2 or by the compression of the line 2 result in a locking force F acting on the locking section 34. As the aperture 35 has, in the perspective shown in Fig. 9, a concave shape, which abuts the latch member 18 in closing direction C, an opening force F, resulting from a pre-load of the line encasements or from external forces, presses the latch member 18 against the inner wall 35a of the aperture 35. Due to the concave or cylindrical shape of the aperture 35, an opening force F will effect a restoring force R which opposes the opening force F. Hence, the concave or cylindrical shape of the aperture 35 and the resulting orientation of the inner walls 35a, which at least sectionally is directed in closing direction C, serve for securing the latch member 18 in the locked position, also in case the spring 19 may fails.

Fig. 10 is a schematic perspective view of a spacer mounting tool 21 configured in accordance to the present invention. The spacer mounting tool 21 comprised a lever 22, a main body 23 having a rotation axis 24 and a coupling section 25. The lever 22 serves as handle for rotating the main body 23. The main body 23 is provided with a recess 26, the recess 26 serves to receive and to guide the coupling section 25 which is supported by the rotation axis 24.

The main body 23 is configured like a cam. Abutment surfaces 23a and 23b are adapted to abut a receiving section of the receptacle while the spacer is mounted. Due to the rounded shape and of the abutment surfaces 23a and 23b the main body 23 is configured to support the coupling section rotatably relative to the abutment surfaces 23a and 23b. While the spacer mounting tool 21 is rotated on the abutting receptacle, the coupling section 25 may rotate around the rotation axis 24 and transmit a stroke on a receiving section coupled to the coupling section 25. To transmit a tension force, the coupling section 25 is provided with a positive locking member 27, the positive locking member 27 located at an end of an elongated member 28 extending out of the recess 26 of the main body 23. The positive locking member 27 is adapted to build up a positive lock with one of the receiving sections when the spacer mounting tool 21 is applied to the spacer. The lever 22 is affixed rigidly to the main body 23 and serves for rotating the main body 23. Thus, by operating the lever 22 the abutment surfaces 23a and 23b can be rotated relative to the coupling section from an installation position into a mounted position, wherein the coupling section 25 in the installation position extends further away from the abutment surfaces 23a, 23b than in the mounting position.

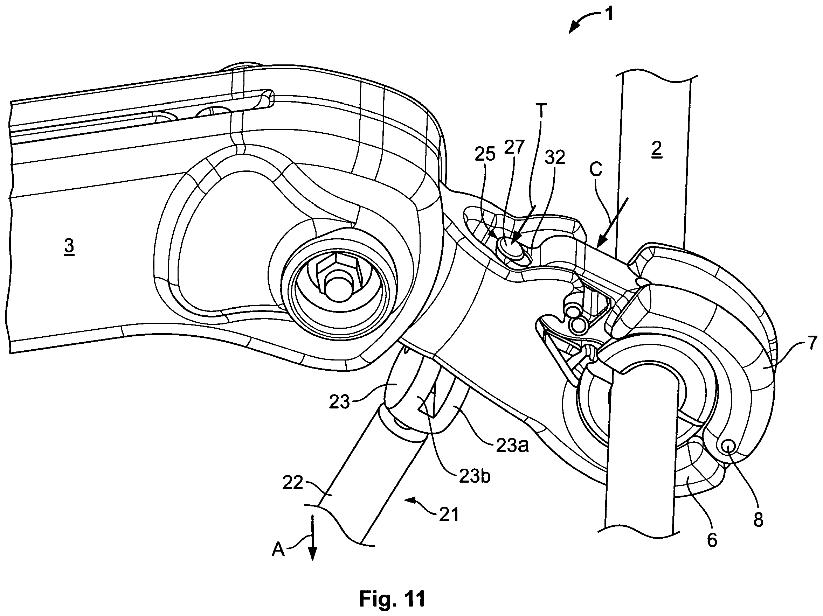

Fig. 11 is a partial view of a spacer 1 with a spacer mounting tool 21. The spacer mounting tool is coupled to the spacer 1 in an installation position, wherein the positive locking member 27 is connected by a positive lock to the second receiving section 7. The second receiving section 7 therefore comprises a coupling organ 32. The coupling organ 32 is formed as a fork having two prongs, the prongs together surrounding a funnel-shaped receptacle for the positive locking member 27. When the lever 22 is operated, i.e. moved in an activation direction A, the main body 23 rotates on the first receiving section 6. By rotating the cam-like main body 23, the coupling organ 25 is pulled in the direction of the main body 23 and of the abutment surfaces 23a, 23b. As the main body 23 is supported rotatably by the first receiving section 6, the second receiving section 7, which is coupled to the coupling section 25, is pulled in closing direction C up to the locked position.

To avoid operation errors, the mounting tool 21 is preferably adapted to generate a predetermined stroke of the coupling section 25. The predetermined stroke may be adapted to the distance covered by the second receiving section 7 when the second receiving section 7 is moved from the pre-locked position to the locked position. The predetermined stroke of the coupling section 25 may be set up by a predetermined radius of the abutment surfaces 23a and 23b. The abutment surfaces 23a and 23b may be rounded circularly. In this case, the maximum stroke of the coupling section 25 equals twice the eccentricity of the rotation axis 24 of the spacer mounting tool in relation to the circular shape of the abutment surfaces 23a, 23b. Alternatively, the abutment surfaces 23a, 23b may be formed circular, oval, or exponential.

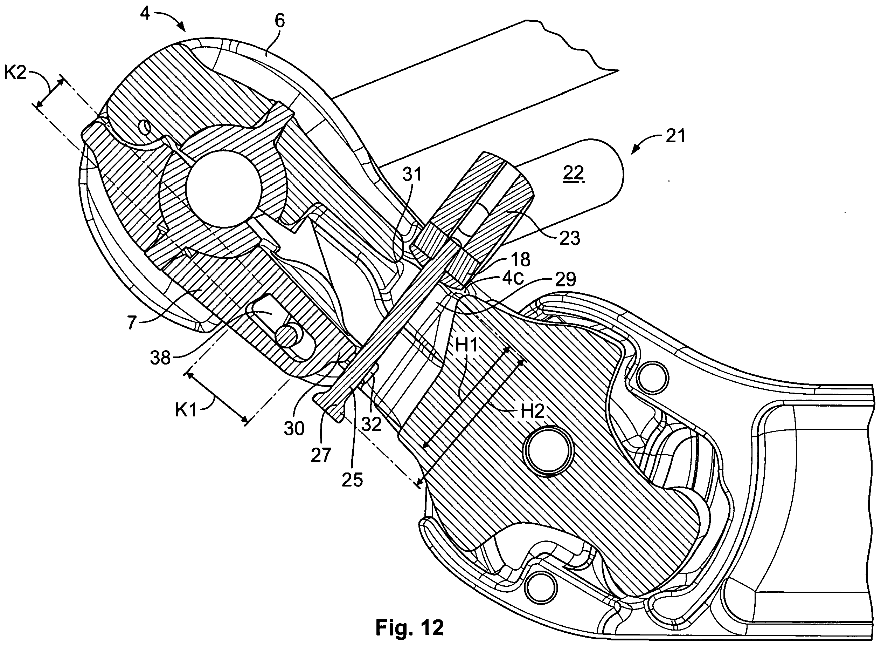

Fig. 12 shows a part cross-sectional partial view of a receptacle in a pre-locked position. The coupling section 25 of the spacer mounting tool 21 is inserted into the through hole 29 and subsequently into the prong-like coupling organ 32. For moving the receptacle 4 from the pre-locked position to the locked position, the operator introduces the coupling section 25 into the trough hole 29 up to a position at which the main body 23 abuts the first receiving section 6. When the main body 23 abuts the bearing face 4c of the receptacle 4 in an installation position of the spacer mounting tool 21, a distance H2 remains between the abutment surfaces 23a, 23b of the spacer mounting tool and the positive locking member 27. Thus, there is enough space left for inserting the coupling section 25 into the gap of the prong-like coupling organ 32. After inserting the coupling section 25 into the coupling organ 32, the operator can move the lever 22 of the spacer mounting tool 21 and rotate the main body 23. By rotating the lever 22 the rotation axis 18 is elevated in relation to the first receiving section 6, generating a stroke of the coupling section 25. After a lever rotation of about 180° the second receiving section 7 is located at the operation position at which the spring lock automatically locks the receptacle.

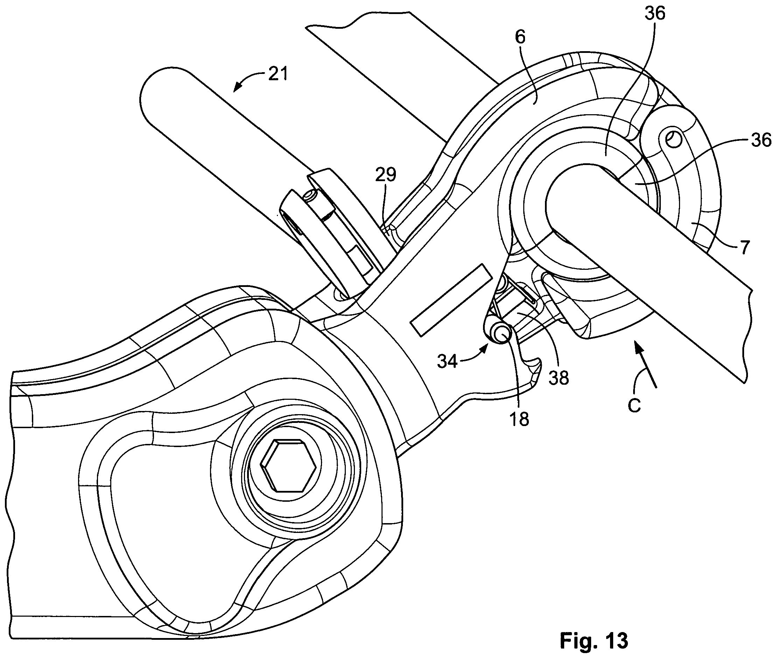

Fig. 13 shows the spacer mounting tool 21 in a locking position of the mounting tool 21 at which the latch member 18 has automatically engaged behind the locking section. At the shown locked position, the line encasement 36 may serve as resilient members, generating a resilient force acting on the second receiving section 7 against closing direction C. The resilient force generated by the line encasement 36 may result in a retention force pressing the latch member 18 by means of the inner walls of the groove 38 into the hook-like locking section 34.

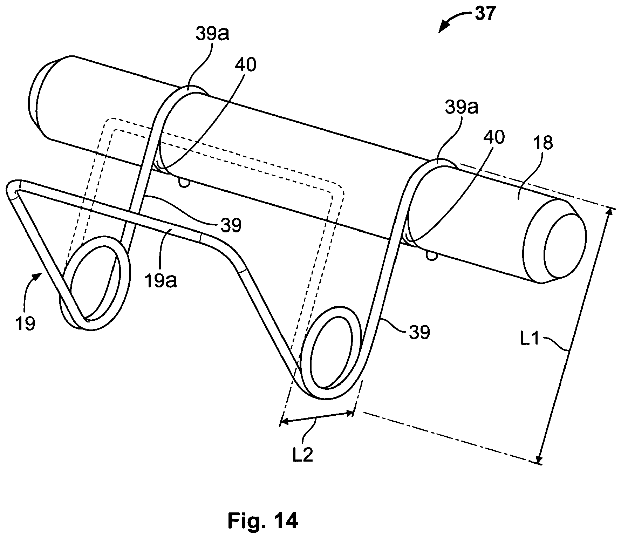

Fig. 14 is schematic perspective view of a spring lock assembly according to the invention. The latch member 18 is formed like a bolt. At its substantially cylindrical peripheral surface the latch member 18 is provided with circumferential notches 40. The notches 40 serve to receive end portions of legs 39 of the spring 19. The end portions 39a of the legs 39 encompass the latch member 18 to form a positive lock.

The spring 19 comprises a yoke 19a connecting the legs 39. As well as the latch member 18, the yoke 19a is inserted into the groove 38 of the second receiving section 7 to support the legs 39 in locking direction.

To mount the spring 19, the spring is compressed up to a state shown by dashed lines. To allow for mounting the spring 19 into the groove 38, the dimension K1 of the groove 38 shown in Fig. 12 can be larger than the dimension L1 of the spring 19. The dimension of K2 of the substantially rectangular groove 38 can be larger than the dimension L2 of the spring 19.

## Claims

1. Spacer (1) for at least two overhead medium or high voltage lines (2), comprising
a central section (3),
at least two line receptacles (4) which are arranged on opposite sides of the central section (3) and comprise each at least a first receiving section (6) and a second receiving section (7),
the receiving sections (6,7) being adapted to be moved relative to each other from an installation position, in which the receptacle (4) provides an insertion opening (4a) for inserting at least one line (2) into the receptacle (4),
into an operation position, in which the insertion opening (4a) is closed and the receiving sections (6,7) are locked, wherein the second receiving section (7) is articulated by a pivot (8), the pivot allowing for moving the receiving sections (6) and (7) relative to each other from the installation position into the operation position, wherein the receptacle (4) is provided with a spring-lock (41), which in the operation position self-actingly locks the receiving sections (6, 7) and wherein the spring-lock (41) comprises a spring-biased latch member (18) on one of the receiving sections (7), the latch member (18) in the operating position being engaged behind a locking section (34) of the other receiving section (6) under effect of spring action, **characterized in that** the spring-lock (41) is adapted to be automatically locked upon movement of one of the receiving sections (6,7) from the installation position into the operation position.

2. Spacer (1) according to claim 1, **characterized in that** the latch member (18), in the unlocked state, is positioned in the line described by motion of the locking section (34) upon transferral from the installation into the operation position.

3. Spacer (1) according to claim 1 or 2, **characterized in that** the spring-lock (41) comprises a slidable locking bolt (18).

4. Spacer (1) according to one of claims 1 to 3, **characterized in that** the spring-lock (41) comprises a leg spring (19), the leg spring (19) arranged between the latch member (18) and a receiving section (7) and encompassing each, the locking bolt (18) and the receiving section (7), form-fittingly.

5. Spacer (1) according to one of claims 1 to 4, **characterized in that** one receiving section (7) is supported pivotally on another receiving section (6) and adapted to wedge on the other receiving section at the installation position.

6. Spacer (1) according to one of claims 1 to 5, **characterized in that** a pre-locked position is provided between the installation position and the operation position, the receiving sections (6, 7) being locked in the pre-locked position.

7. Spacer (1) according to one of claims 1 to 6, **characterized in that** the receptacle (4) is automatically positioned in the pre-locked position upon transferral from the installation position into the operation position.

8. Spacer (1) according to one of claims 1 to 7, **characterized in that** the receptacles (4) each comprise a line encasement (36) cladding the receiving sections (6,7) at their surfaces facing the line (2) in the operation position and being configured to be deformed elastically in the installation position.

9. Spacer (1) according to one of claims 1 to 8, **characterized in that** at least one of the receiving sections (6,7) has a through-hole (29) for receiving a coupling section (25) of a spacer mounting tool (21).

10. Spacer (1) according to one of claims 1 to 9, **characterized in that** at least one of the receiving sections (6,7) has a concavely rounded bearing face (4c) adapted to receive an abutment surface (23a, 23b) of a spacer mounting tool (21).

11. Spacer mounting tool (21) for mounting a spacer (1) for at least two overhead medium or high voltage lines, the spacer (1) comprising at least two receptacles (4), the receptacles (4) each having at least two receiving sections (6,7) which can be opened for insertion of at least one line (2) and locked in a closed state,
the spacer mounting tool (21) being provided with a coupling section (25) which is adapted to be engaged to one of the receiving sections (7), **characterized in that** the spacer mounting tool (21) is provided with at least one substantially rounded abutment surface (23a, 23b) adapted to abut on the other of the receiving sections (6) and supporting the coupling section (25) rotatably relative to the abutment surface (23a, 23b),
and a lever (22) being non-rotatably connected to the abutment surface (23a, 23b),
the abutment surface (23a, 23b) being supported rotatably relative to the coupling section (25) from an installation position into a locking position, the coupling section (25) in the installation position extending further away from the abutment surface (23a, 23b) than in the mounting position.

12. Spacer set for at least two overhead medium or high voltage lines (2), **characterized by** at least one spacer (1) according to one of claims 1 to 10 and at least one spacer mounting tool (21) according to claim 11.

13. Method for installing a spacer (1) on at least two overhead high or medium voltage lines (2), the method including the steps of
inserting each of the lines (2) into an insertion opening (4a) of a receptacle (4) of the spacer (1),
closing each insertion opening (4a) by moving one receiving section (7) relative to another second receiving section (6), wherein the second receiving section (7) is pivoted in a closing direction (C) to close the receptacle (4),
**characterized in that** the one receiving section (7) is being affixed to the other second receiving section (6) **in that** a spring-lock (41) at each receptacle (4) locks the receiving sections (6,7) self-actingly by engaging a spring-biased latch member (18) of the spring-lock (41) on the one receiving section (7) behind a locking section (34) of the other receiving section (6) under effect of spring action while the one receiving section (7) is moved relative to the other receiving section (6) in a closing direction (C).

## Patentansprüche

1. Abstandshalter (1) für wenigstens zwei Mittel- oder Hochspannungs-Freileitungen (2), umfassend:
einen Mittelabschnitt (3),
wenigstens zwei Leitungsaufnahmen (4), die an gegenüberliegenden Seiten des Mittelabschnitts (3) angeordnet sind und jeweils wenigstens einen ersten aufnehmenden Abschnitt (6) sowie einen zweiten aufnehmenden Abschnitt (7) umfassen,
wobei die aufnehmenden Abschnitte (6, 7) so eingerichtet sind, dass sie relativ zueinander von einer Installationsposition, in der die Aufnahme (4) eine Einführöffnung (4a) zum Einführen wenigstens einer Leitung (2) in die Aufnahme (4) bereitstellt,
in eine Betriebsposition bewegt werden, in der die Einführöffnung (4a) geschlossen ist und die aufnehmenden Abschnitte (6, 7) verriegelt sind, wobei der zweite aufnehmende Abschnitt (7) über einen Drehzapfen (8) gelenkig gelagert ist und der Drehzapfen Bewegung der aufnehmenden Abschnitte (6) und (7) relativ zueinander von der Installationsposition in die Betriebsposition ermöglicht, die Aufnahme (4) mit einer Schnappverriegelung (41) versehen ist, die in der Betriebsposition die aufnehmenden Abschnitte (6, 7) selbsttätig verriegelt, und die Schnappverriegelung (41) ein federgespanntes Riegelelement (18) an einem der aufnehmenden Abschnitte (7) umfasst, wobei das Riegelelement (18) in der Betriebsposition aufgrund von Federwirkung mit einem Verriegelungsabschnitt (34) des anderen aufnehmenden Abschnitts (6) von hinten in Eingriff ist, **dadurch gekennzeichnet, dass** die Schnappverriegelung (41) so ausgebildet ist, dass sie bei Bewegung eines der aufnehmenden Abschnitte (6, 7) von der Installationsposition in die Betriebsposition automatisch verriegelt wird.

2. Abstandshalter (1) nach Anspruch 1, **dadurch gekennzeichnet, dass** das Riegelelement (18) in dem unverriegelten Zustand auf der Linie positioniert ist, die durch Bewegung des Verriegelungsabschnitts (34) bei Übergang von der Installations- in die Betriebsposition beschrieben wird.

3. Abstandshalter (1) nach Anspruch 1 oder 2, **dadurch gekennzeichnet, dass** die Schnappverriegelung (41) einen verschiebbaren Verriegelungsbolzen (18) umfasst.

4. Abstandshalter (1) nach einem der Ansprüche 1 bis 3, **dadurch gekennzeichnet, dass** die Schnappverriegelung (41) eine Schenkelfeder (19) umfasst, wobei die Schenkelfeder (19) zwischen dem Riegelelement (18) und einem aufnehmenden Abschnitt (7) angeordnet ist und den Verriegelungsbolzen (18) sowie den aufnehmenden Abschnitt (7) jeweils formschlüssig umschließt.

5. Abstandshalter (1) nach einem der Ansprüche 1 bis 4, **dadurch gekennzeichnet, dass** ein aufnehmender Abschnitt (7) schwenkbar an einem anderen aufnehmenden Abschnitt (6) gelagert und so eingerichtet ist, dass er in der Installationsposition an dem anderen aufnehmenden Abschnitt verkeilt ist.

6. Abstandshalter (1) nach einem der Ansprüche 1 bis 5, **dadurch gekennzeichnet, dass** zwischen der Installationsposition und der Betriebsposition eine Vor-Verriegelungsposition vorhanden ist und die aufnehmenden Abschnitte (6, 7) in der Vor-Verriegelungsposition verriegelt sind.

7. Abstandshalter (1) nach einem der Ansprüche 1 bis 6, **dadurch gekennzeichnet, dass** die Aufnahme (4) bei Übergang von der Installationsposition in die Betriebsposition automatisch in die Vor-Verriegelungsposition gebracht wird.

8. Abstandshalter (1) nach einem der Ansprüche 1 bis 7, **dadurch gekennzeichnet, dass** die Aufnahmen (4) jeweils eine Leitungs-Ummantelung (36) umfassen, die in der Betriebsposition die aufnehmenden Abschnitte (6,7) an ihren der Leitung (2) zugewandten Flächen umhüllt und so ausgeführt ist, dass sie in der Installationsposition elastisch verformt werden kann.

9. Abstandshalter (1) nach einem der Ansprüche 1 bis 8, **dadurch gekennzeichnet, dass** wenigstens einer der aufnehmenden Abschnitte (6, 7) ein Durchgangsloch (29) zum Aufnehmen eines Kopplungsabschnitts (25) eines Abstandshalter-Montagewerkzeugs (21) aufweist.

10. Abstandshalter (1) nach einem der Ansprüche 1 bis 9, **dadurch gekennzeichnet, dass** wenigstens einer der aufnehmenden Abschnitte (6, 7) eine konkav gerundete Auflagefläche (4c) aufweist, die zum Aufnehmen einer Anliegefläche (23a, 23b) eines Abstandshalter-Montagewerkzeugs (21) eingerichtet ist.

11. Abstandshalter-Montagewerkzeug (21) zum Montieren eines Abstandshalters (1) für wenigstens zwei Mittel- oder Hochspannungs-Freileitungen, wobei der Abstandshalter (1) wenigstens zwei Aufnahmen (4) umfasst und die Aufnahmen (4) jeweils wenigstens zwei aufnehmende Abschnitte (6, 7) aufweisen, die zum Einführen wenigstens einer Leitung (2) geöffnet und in einem geschlossenen Zustand verriegelt werden können,
das Abstandshalter-Montagewerkzeug (21) mit einem Kopplungsabschnitt (25) versehen ist, der so eingerichtet ist, dass er mit einem der aufnehmenden Abschnitte (7) in Eingriff gebracht wird, **dadurch gekennzeichnet, dass** das Abstandshalter-Montagewerkzeug (21) mit wenigstens einer im Wesentlichen abgerundeten Anliegefläche (23a, 23b) versehen ist, die so eingerichtet ist, dass sie an dem anderen der aufnehmenden Abschnitte (6) anliegt und den Kopplungsabschnitt (25) relativ zu der Anliegefläche (23a, 23b) drehbar lagert,
sowie mit einem Hebel (22), der nicht drehbar mit der Anliegefläche (23a, 23b) verbunden ist,
wobei die Anliegefläche (23a, 23b) so gelagert ist, dass sie relativ zu dem Kopplungsabschnitt (25) von einer Installationsposition in eine Verriegelungsposition gedreht werden kann, wobei sich der Kopplungsabschnitt (25) in der Installationsposition weiter von der Anliegefläche (23a, 23b) weg erstreckt als in der Montageposition.

12. Abstandshalter-Satz für wenigstens zwei Mittel- oder Hochspannungs-Freileitungen (2), **gekennzeichnet durch** wenigstens einen Abstandshalter (1) nach einem der Ansprüche 1 bis 10 und wenigstens ein Abstandshalter-Montagewerkzeug (21) nach Anspruch 11.

13. Verfahren zum Installieren eines Abstandshalters (1) an wenigstens zwei Hoch- oder Mittelspannungs-Freileitungen (2), wobei das Verfahren die folgenden Schritte einschließt:
Einführen jeder der Leitungen (2) in eine Einführöffnung (4a) einer Aufnahme(4) des Abstandshalters (1),
Schließen jeder Einführöffnung (4a) durch Bewegen eines aufnehmenden Abschnitts (7) relativ zu einem anderen zweiten aufnehmenden Abschnitt (6), wobei der zweite aufnehmende Abschnitt (7) in einer Schließrichtung (C) geschwenkt wird, um die Aufnahme (4) zu schließen,
**dadurch gekennzeichnet, dass** der eine aufnehmende Abschnitt (7) an dem anderen zweiten aufnehmenden Abschnitt (6) dadurch befestigt ist, dass eine Schnappverriegelung (41) an jeder Aufnahme (4) die aufnehmenden Abschnitte (6, 7) selbsttätig verriegelt, indem ein federgespanntes Riegelelement (18) der Schnappverriegelung (41) an dem einen aufnehmenden Abschnitt (7) aufgrund von Federwirkung mit einem Verriegelungsabschnitt (34) des anderen aufnehmenden Abschnitts (6) von hinten in Eingriff kommt, während der eine aufnehmende Abschnitt (7) relativ zu dem anderen aufnehmenden Abschnitt (6) in einer Schließrichtung (C) bewegt wird.

## Revendications

1. Espaceur (1) pour au moins deux lignes aériennes à moyenne ou haute tension (2), comprenant:
une section centrale (3),
au moins deux réceptacles de ligne (4) qui sont disposés sur des côtés opposés de la section centrale (3) et comprennent chacun au moins une première section de réception (6) et une seconde section de réception (7),
les sections de réception (6,7) étant conçues pour être déplacées les unes par rapport aux autres à partir d'une position d'installation, dans laquelle le réceptacle (4) présente une ouverture d'insertion (4a) pour l'insertion d'au moins une ligne (2) dans le réceptacle (4),
dans une position de fonctionnement, dans laquelle l'ouverture d'insertion (4a) est fermée et les sections de réception (6, 7) sont verrouillées, dans laquelle la seconde section de réception (7) est articulée par un pivot (8), le pivot permettant de déplacer les sections de réception (6) et (7) l'une par rapport à l'autre de la position de montage à la position de fonctionnement, dans laquelle le réceptacle (4) est muni d'un verrou à ressort (41), qui, dans la position de fonctionnement, verrouille automatiquement les sections de réception (6), 7) et dans laquelle le verrou à ressort (41) comprend un élément de verrouillage (18) sollicité par ressort sur l'une des sections de réception (7), l'élément de verrouillage (18) en position de fonctionnement étant engagé derrière une section de verrouillage (34) de l'autre section de réception (6) sous l'effet de l'action d'un ressort, **caractérisé en ce que** le verrou à ressort (41) est conçu pour être automatiquement verrouillé lors du mouvement de l'une des sections de réception (6, 7) de la position de montage à la position de fonctionnement.

2. Espaceur (1) selon la revendication 1, **caractérisé en ce que** l'élément de verrouillage (18), à l'état déverrouillé, est positionné dans la ligne décrite par le mouvement de la section de verrouillage (34) lors du transfert de l'installation à la position de fonctionnement.

3. Espaceur (1) selon les revendications 1 ou 2, **caractérisé en ce que** le verrou à ressort (41) comprend un boulon de verrouillage coulissant (18).

4. Espaceur (1) selon l'une des revendications 1 à 3, **caractérisé en ce que** le verrou à ressort (41) comprend un ressort à branches (19), le ressort à branches (19) étant disposé entre l'élément de verrouillage (18) et une section de réception (7) et entourant chacun, par complémentarité de forme, le verrou (18) et la section de réception (7).

5. Espaceur (1) selon l'une des revendications 1 à 4, **caractérisé en ce qu'**une section de réception (7) est supportée de manière pivotante sur une autre section de réception (6) et conçue pour se caler sur l'autre section de réception à la position de montage.

6. Espaceur (1) selon l'une des revendications 1 à 5, **caractérisé en ce qu'**une position de pré-verrouillage est prévue entre la position de montage et la position de fonctionnement, les sections de réception (6, 7) étant verrouillées dans la position de pré-verrouillage.

7. Espaceur (1) selon l'une des revendications 1 à 6, **caractérisé en ce que** le réceptacle (4) est automatiquement positionné en position pré-verrouillée lors de son transfert de la position de montage à la position de fonctionnement.

8. Espaceur (1) selon l'une des revendications 1 à 7, **caractérisé en ce que** les réceptacles (4) comprennent chacun un revêtement de ligne (36) qui, en position de fonctionnement, enveloppe les sections de réception (6, 7) sur leurs surfaces tournées vers la ligne (2) et qui est configuré pour être déformé élastiquement en position de montage.

9. Espaceur (1) selon l'une des revendications 1 à 8, **caractérisé en ce qu'**au moins l'une des sections de réception (6,7) présente un trou traversant (29) pour recevoir une section d'accouplement (25) d'un outil de montage d'espaceur (21).

10. Espaceur (1) selon l'une des revendications 1 à 9, **caractérisé en ce qu'**au moins l'une des sections de réception (6, 7) présente une face d'appui (4c) arrondie de manière concave, conçue pour recevoir une surface de butée (23a, 23b) d'un outil de montage d'espaceur (21).

11. Outil de montage d'espaceur (21) pour le montage d'un espaceur (1) pour au moins deux lignes aériennes à moyenne ou haute tension, l'espaceur (1) comprenant au moins deux réceptacles (4), les réceptacles (4) ayant chacun au moins deux sections de réception (6, 7) qui peuvent être ouvertes pour l'insertion d'au moins une ligne (2) et verrouillées dans un état fermé,
l'outil de montage de l'espaceur (21) étant muni d'une section d'accouplement (25) qui est conçue pour être engagée dans une des sections de réception (7), **caractérisé en ce que** l'outil de montage de l'espaceur (21) est muni d'au moins une surface de butée (23a) sensiblement arrondie, 23b) conçu pour venir en butée sur l'autre des sections de réception (6) et supportant la section d'accouplement (25) de manière rotative par rapport à la surface de butée (23a, 23b),
et un levier (22) étant relié de manière non rotative à la surface de butée (23a, 23b), la surface de butée (23a), 23b) étant supporté de manière à pouvoir tourner par rapport à la section d'accouplement (25) d'une position de montage à une position de verrouillage, la section d'accouplement (25) en position de montage s'étendant plus loin de la surface de butée (23a, 23b) que dans la position de montage.

12. Jeu d'espaceurs pour au moins deux lignes aériennes à moyenne ou haute tension (2), **caractérisé par** au moins un espaceur (1) selon l'une des revendications 1 à 10 et au moins un outil de montage d'espaceur (21) selon la revendication 11.

13. Procédé d'installation d'un espaceur (1) sur au moins deux lignes aériennes à haute ou moyenne tension (2), le procédé comprenant les étapes suivantes:
insérer chacune des lignes (2) dans une ouverture d'insertion (4a) d'un réceptacle (4) de l'espaceur (1),
fermer chaque ouverture d'insertion (4a) en déplaçant une section de réception (7) par rapport à une autre seconde section de réception (6), la seconde section de réception (7) étant pivotée dans une direction de fermeture (C) pour fermer le réceptacle (4),
**caractérisé en ce que** l'une des sections de réception (7) est fixée à l'autre seconde section de réception (6) **en ce qu'**un verrou à ressort (41) sur chaque réceptacle (4) verrouille les sections de réception (6, 7) de manière autonome en engageant un élément de verrouillage (18) du verrou à ressort (41), sollicité par un ressort, sur l'une des sections de réception (7) derrière une section de verrouillage (34) de l'autre section de réception (6) sous l'effet de l'action du ressort tandis que l'une des sections de réception (7) est déplacée par rapport à l'autre section de réception (6) dans une direction de fermeture (C).
